# EUROPEAN PATENT APPLICATION

(11) **EP 3 089 183 A1**
(43) Date of publication of application: **02.11.2016**
(21) Application number: 14874177.0
(22) Date of filing: 24.12.2014
(51) Int. Cl.: H01G 11/26, H01G 11/06, H01G 11/30, H01G 11/52, H01G 11/70

(54) **ALKALI METAL ION CAPACITOR**

(30) Priority: 26.12.2013 JP 2013269841; 06.11.2014 JP 2014226233
(71) Applicant: Sumitomo Electric Industries, Ltd., Osaka-shi, Osaka 541-0041 (JP)
(72) Inventor: TAKEYAMA, Tomoharu, Itami-shi, Hyogo 664-0016 (JP); MAJIMA, Masatoshi, Itami-shi, Hyogo 664-0016 (JP); OGAWA, Mitsuyasu, Itami-shi, Hyogo 664-0016 (JP); UEDA, Mitsuyasu, Itami-shi, Hyogo 664-0016 (JP); OKUNO, Kazuki, Itami-shi, Hyogo 664-0016 (JP); TAKAHASHI, Kenji, Itami-shi, Hyogo 664-0016 (JP)
(74) Representative: Boult Wade Tennant
(86) International application number: PCT/JP2014/084028
(87) International publication number: WO 2015/098903

(57) **Abstract**

An alkali metal ion capacitor includes a positive electrode; a negative electrode; a separator disposed between the positive electrode and the negative electrode; and an electrolyte containing alkali metal ions and anions, wherein the separator has a thickness of 10 µm or less, the positive electrode includes a positive electrode current collector having a three-dimensional mesh-like metal skeleton and a positive electrode active material held on the positive electrode current collector, the negative electrode includes a negative electrode current collector having a three-dimensional mesh-like metal skeleton and a negative electrode active material held on the negative electrode current collector, the positive electrode has a maximum surface roughness Rz1 of 35 µm or less and the negative electrode has a maximum surface roughness Rz2 of 35 µm or less.

## Description

### Technical Field

The present invention relates to an alkali metal ion capacitor in which the positive electrode and the negative electrode each include a current collector having a three-dimensional mesh-like metal skeleton.

### Background Art

With a trend of focusing on environmental issues, there have been intensive developments of systems that convert clean energy such as sunlight or wind power to electric power and store the energy in the form of electric energy. Known examples of such storage devices include lithium ion secondary batteries, electric double layer capacitors, and lithium ion capacitors. Recently, capacitors such as lithium ion capacitors have been attracting attention because capacitors have good instantaneous charge-discharge properties and high-output properties and are easily handled.

In general, a lithium ion capacitor includes a positive electrode containing a porous carbon material such as active carbon as the active material; a negative electrode containing a material that occludes and releases lithium ions, as the active material; a separator disposed between the positive electrode and the negative electrode; and a lithium-ion conductive non-aqueous electrolyte. The separator prevents occurrence of a short-circuit between the positive electrode and the negative electrode and holds the non-aqueous electrolyte so as to be around the positive electrode and the negative electrode. Patent Literature 1 has proposed use of a separator having two or more layers that differ in the fiber structure for electrochemical devices such as lithium ion capacitors.

### Citation List

### Patent Literature

PTL 1: Japanese Unexamined Patent Application Publication No. 2012-209181

### Summary of Invention

### Technical Problem

Recently, electrochemical devices having higher capacities have been required in more applications. Accordingly, there has been a demand for as much as possible reduction in the volume (that is, thickness) of the separator, which does not contribute to the capacity. The separator in PTL 1 has a relatively small thickness of 5 to 40 µm. However, as the thickness of the separator decreases, the amount of the electrolyte held decreases. Thus, sufficient capacity (and/or output) tends not to be provided.

In particular, unlike lithium ion secondary batteries and the like, for alkali metal ion capacitors such as a lithium ion capacitor, alkali metal ions that are carrier ions for charge-discharge reactions are not supplied from the electrodes and are contained in the electrolyte alone. As the amount of the electrolyte held by the separator decreases, the amount of movable carrier ions decreases, resulting in a considerable decrease in the capacity (and/or output) of the capacitor. Accordingly, actually, it is difficult to use a separator having a small thickness for alkali metal ion capacitors.

In addition, when a separator having a small thickness is used and a high load is applied to the separator between the positive electrode and the negative electrode during assembly of the electrochemical device and within the electrochemical device, the separator tends to be torn, which tends to result in an internal short-circuit.

### Solution to Problem

An object of the present invention is to provide an alkali metal ion capacitor in which, in spite of use of a small-thickness separator, occurrence of an internal short-circuit is suppressed and capacity sufficient for performing charging and discharging can be obtained.

An aspect according to the present invention relates to an alkali metal ion capacitor including a positive electrode; a negative electrode; a separator disposed between the positive electrode and the negative electrode; and an electrolyte containing alkali metal ions and anions, wherein the separator has a thickness of 10 µm or less, the positive electrode includes a positive electrode current collector having a three-dimensional mesh-like metal skeleton and a positive electrode active material held on the positive electrode current collector, the negative electrode includes a negative electrode current collector having a three-dimensional mesh-like metal skeleton and a negative electrode active material held on the negative electrode current collector, the positive electrode has a maximum surface roughness Rz1 of 35 µm or less and the negative electrode has a maximum surface roughness Rz2 of 35 µm or less.

### Advantageous Effects of Invention

According to the present invention, in spite of use of a small-thickness separator, capacity sufficient for performing charging and discharging can be obtained. In addition, breakage of the separator during assembly of the alkali metal ion capacitor can be suppressed, to thereby suppress occurrence of an internal short-circuit between the positive electrode and the negative electrode.

### Brief Description of Drawing

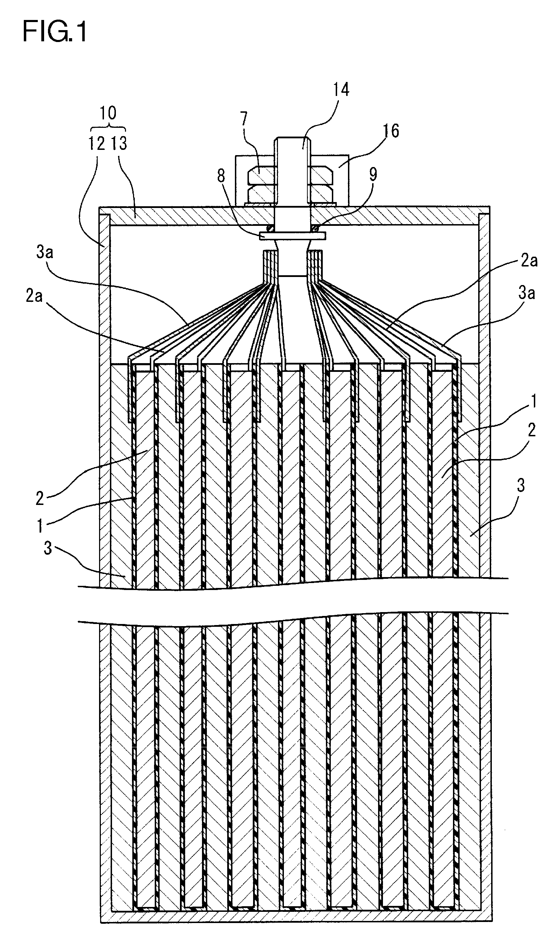

[Fig. 1] Figure 1 is a longitudinal sectional view schematically illustrating an alkali metal capacitor according to an embodiment of the present invention.

### Description of Embodiments

### [Description of Embodiments]

Features of embodiments according to the present invention will be listed and described.

An embodiment according to the present invention relates to (1) an alkali metal ion capacitor including a positive electrode; a negative electrode; a separator disposed between the positive electrode and the negative electrode; and an electrolyte containing alkali metal ions and anions, wherein the separator has a thickness of 10 µm or less, the positive electrode includes a positive electrode current collector having a three-dimensional mesh-like metal skeleton and a positive electrode active material held on the positive electrode current collector, the negative electrode includes a negative electrode current collector having a three-dimensional mesh-like metal skeleton and a negative electrode active material held on the negative electrode current collector, the positive electrode has a maximum surface roughness Rz1 of 35 µm or less and the negative electrode has a maximum surface roughness Rz2 of 35 µm or less.

In general, use of a small-thickness separator, which facilitates an increase in the volume of electrodes within the storage device, is advantageous in order to increase the capacity. However, unlike lithium ion secondary batteries and the like, for alkali metal ion capacitors such as a lithium ion capacitor, the electrodes do not supply alkali metal ions serving as carrier ions for charge-discharge reactions. In other words, for alkali metal ion capacitors, ions contained in the electrolyte alone serve as carrier ions responsible for charge-discharge reactions. Use of a small-thickness separator results in a small amount of the electrolyte held. Thus, the amount of carrier ions becomes insufficient, so that capacity (and/or output) sufficient for performing charging and discharging is difficult to ensure. Therefore, actually, small-thickness separators are difficult to use for alkali metal ion capacitors.

During assembly of an electrode group from electrodes and a separator and/or within the capacitor, a high load is applied to the separator sandwiched between the positive electrode and the negative electrode. For this reason, when the separator has a small thickness, the separator tends to break and an internal short-circuit tends to occur.

In an embodiment according to the present invention, each of the positive electrode and the negative electrode employs the metal porous body having the three-dimensional mesh-like skeleton as the current collector, so that, even after the active material is held on the current collector, each of the positive electrode and the negative electrode has high porosity. Thus, the positive electrode and the negative electrode can hold a large amount of electrolyte, so that, even with a small-thickness separator, capacity (and/or output) sufficient for performing charging and discharging can be ensured.

When metal porous bodies having three-dimensional mesh-like skeletons are used as current collectors, electrode mixtures can be filled into the skeletons, which is advantageous in an increase in the capacity. However, unlike the case of using metal foil current collectors, the electrodes tend to have a high surface roughness. When the electrodes have a high surface roughness, use of a small-thickness separator considerably increases the probability that the separator is torn, so that occurrence of an internal short-circuit is difficult to suppress. Compared with the case of employing metal foil current collectors, use of metal porous bodies as current collectors provides electrodes having high rigidity. On the other hand, a small-thickness separator has high flexibility and is considerably different in terms of rigidity from electrodes employing metal porous bodies. Accordingly, during formation of an electrode group by stacking such electrodes and the separator, a high load tends to be applied to the separator, which tends to cause the separator to be damaged and/or displaced. When the separator is damaged and/or displaced, an internal short-circuit occurs within the capacitor.

In an embodiment according to the present invention, the maximum surface roughness of each of the positive electrode and the negative electrode is set to satisfy a specific range, so that, in spite of the small thickness of the separator, breakage and/or displacement of the separator during assembly of the electrode group and/or within the capacitor can be suppressed. As a result, occurrence of an internal short-circuit between the positive electrode and the negative electrode can be suppressed. Note that, herein, the surface roughness of each of the positive electrode and the negative electrode denotes the maximum roughness (maximum height) Rz; and the maximum roughness Rz and maximum roughnesses Rz1 and Rz2 each denote maximum roughness (maximum height) Rz (µm) in compliance with JIS B0601:2001 or ISO1302:2002.

During production of the electrode group or within the capacitor, application of a high load to the separator may break the separator and result in occurrence of an internal short-circuit. Herein, "breakage of the separator is suppressed" means that, when a load within a predetermined range is applied to the separator within the alkali metal ion capacitor, tearing and/or damaging of the separator does not occur or the degree of tearing and/or damaging is reduced. The load within the predetermined range is, for example, 0.05 to 0.80 MPa, preferably 0.09 to 0.70 MPa, more preferably 0.20 to 0.70 MPa or 0.40 to 0.70 MPa.

(2) The separator preferably has a thickness of 3 to 10 µm. By using such a separator, while the effect of suppressing occurrence of an internal short-circuit is ensured, the volume of the electrodes within the capacitor can be increased.
(3) The positive electrode current collector and the negative electrode current collector each preferably have a hollow skeleton. Such a current collector is lightweight and also facilitates control of the surface roughness of the electrode. The hollow skeleton of the electrode current collector has a tunnel shape or a tube shape, which further facilitates flowing of the electrolyte within the capacitor.
(4) The positive electrode preferably has a maximum surface roughness Rz1 of 15 to 35 µm, and the negative electrode preferably has a maximum surface roughness Rz2 of less than 15 µm. When the positive electrode and the negative electrode have surface roughnesses satisfying such ranges, damaging of the separator and/or displacement of the separator can be more effectively suppressed and occurrence of an internal short-circuit can be suppressed.
(5) The positive electrode active material preferably contains a porous carbon material that reversibly holds at least the anions, and the negative electrode active material preferably contains a material that reversibly holds the alkali metal ions. For the positive electrode and the negative electrode that include the active materials, even when the same current collectors having a three-dimensional mesh-like skeleton are used, the positive electrode tends to have a higher surface roughness than the negative electrode. Also, in such cases, the surface roughnesses are controlled to be within specific ranges in an embodiment according to the present invention, so that breakage and/or displacement of the separator can be suppressed and occurrence of a short-circuit can be more effectively suppressed.
(6) The separator is preferably a fine porous membrane containing an aromatic polyamide, and the separator preferably has a porosity of 40 to 70% by volume. By using such a separator, high ion conductivity can be ensured and occurrence of an internal short-circuit can be effectively suppressed even in spite of the small thickness.
(7) A ratio Rz1/Rz2 of the maximum surface roughness Rz1 of the positive electrode to the maximum surface roughness Rz2 of the negative electrode is preferably 1.5 to 5. When the ratio Rz1/Rz2 is in such a range, more balanced suppression of breakage and/or displacement of the separator can be achieved.
(8) The positive electrode preferably includes the positive electrode current collector and a positive electrode mixture that fills the positive electrode current collector and that contains the positive electrode active material, the positive electrode mixture preferably contains the positive electrode active material, a conductive assistant, and a binder, and the binder preferably contains at least one selected from the group consisting of carboxyalkyl celluloses and salts thereof. When such a binder is used, the positive electrode tends to have a high surface roughness. Even in such cases, by controlling the surface roughnesses of the positive electrode and the negative electrode, breakage and/or displacement of the separator can be more effectively suppressed.

### [Details of Embodiments]

Hereinafter, specific examples of alkali metal ion capacitors according to embodiments of the present invention will be described appropriately with reference to the drawing. Note that the scope of the present invention is not limited to these examples, is indicated by Claims, and is intended to embrace all the modifications within the meaning and range of equivalency of the Claims.

### (Alkali Metal Ion Capacitor)

An alkali metal ion capacitor includes a positive electrode, a negative electrode, a separator disposed between the positive electrode and the negative electrode, and an electrolyte containing alkali metal ions and anions. Hereinafter, components of the alkali metal ion capacitor will be described further in detail.

### (Positive Electrode)

The positive electrode includes a positive electrode current collector having a three-dimensional mesh-like metal skeleton, and a positive electrode active material held on the positive electrode current collector.

### (Positive Electrode Current Collector)

Examples of the material for the positive electrode current collector include aluminum and aluminum alloys. Examples of the aluminum alloys include aluminum-iron alloys, aluminum-silicon alloys, aluminum-copper alloys, aluminum-manganese alloys, aluminum-chromium alloys, aluminum-zinc alloys, aluminum-titanium alloys, aluminum-nickel alloys, aluminum-magnesium alloys, and aluminum-magnesium-silicon alloys.

The aluminum content of the positive electrode current collector is, for example, 80% by mass or more, preferably 90% by mass or more, more preferably 95% by mass or more. The aluminum content of the positive electrode current collector is 100% by mass or less and may be 99.9% by mass or less. These lower limit values and upper limit values can be freely combined. The aluminum content of the positive electrode current collector is, for example, 80 to 100% by mass, or 95 to 100% by mass. The positive electrode current collector may contain unavoidable impurities.

The positive electrode current collector having a three-dimensional mesh-like skeleton includes plural fiber portions (or rod portions). These plural fiber portions are three-dimensionally linked together to form the three-dimensional mesh-like skeleton. The positive electrode current collector having a three-dimensional mesh-like skeleton can be formed by subjecting a resin porous body having a continuous pore (such as a resin foam or a resin nonwoven fabric) to, for example, a plating treatment, to cover the resin porous body with a metal forming the current collector (specifically, aluminum and/or an aluminum alloy). The resultant positive electrode current collector has a large number of pores each having the shape of a cell derived from the shape of the resin foam, and thus has a continuous pore (that is, interconnected pores) constituted by the interconnected cell-shaped pores. Adjacent cell-shaped pores preferably have an opening (or a window) therebetween such that the opening provides interconnection between the pores.

From the standpoint of increasing the capacity of the capacitor, the positive electrode current collector has a porosity of, for example, 30 to 99% by volume, preferably 50 to 98% by volume, more preferably 80 to 98% by volume or 90 to 98% by volume. The three-dimensional mesh-like skeleton has an average pore size (average size of interconnected cell-shaped pores) of, from the standpoint of the capability of holding the positive electrode active material (and/or the capability of being filled with the positive electrode mixture), for example, 50 to 1000 µm, preferably 100 to 900 µm, more preferably 350 to 900 µm. The average pore size is preferably smaller than the thickness of the positive electrode current collector (or the positive electrode).

In a preferred embodiment, the positive electrode current collector having a three-dimensional mesh-like skeleton has a hollow in its skeleton (that is, a hollow skeleton) as a result of removal of the resin porous body. The hollow within the skeleton of the positive electrode current collector may have the shape of interconnected pores. Such a skeleton has a tunnel shape or a tube shape. The positive electrode current collector having a hollow skeleton has a bulky three-dimensional structure, but is very lightweight. When such a current collector is compressed to form the positive electrode, the surface roughness of the positive electrode is easily controlled. The hollow within the skeleton has an average width of, for example, 0.5 to 5 µm, preferably 1 to 4 µm or 2 to 3 µm. After the compression, the hollow within the skeleton still remains to some extent, so that the electrolyte can flow through the hollow within the skeleton in the capacitor.

The positive electrode is formed by making the positive electrode current collector hold the positive electrode active material (or filling the positive electrode current collector with a positive electrode mixture containing the positive electrode active material), then normally drying the positive electrode current collector, and compressing (or rolling) the positive electrode current collector in its thickness direction. The compression causes changes in the porosity and average pore size of the positive electrode current collector. The above-described ranges of the porosity and average pore size of the positive electrode current collector are ranges of the porosity and average pore size of the positive electrode current collector that is to be made to hold the positive electrode active material (or to be filled with the positive electrode mixture) and that is to be compressed.

The positive electrode current collector has a very high porosity and a large specific surface area. Thus, a large amount of the active material can be made to adhere to the large area of the current collector surface including the internal surfaces of the pores. In the positive electrode, while the pores are filled with a large amount of active material, a large contact area between the current collector and the active material is achieved and a high porosity is achieved. Thus, the active material can be effectively used. The positive electrode current collector has a specific surface area (BET specific surface area) of, for example, 100 to 700 cm²/g, preferably 150 to 650 cm²/g, more preferably 200 to 600 cm²/g.

In each of the positive electrode and the negative electrode, the three-dimensional network of the current collector spreads throughout the electrode, so that the fiber portions of the current collector are disposed close to each other, and the distances from fiber portions to active material particles are short. Thus, the positive electrode and the negative electrode have high conductivity. The positive electrode and the negative electrode having been filled with electrode mixtures can still have a certain level of porosity. Accordingly, even in spite of the small thickness of the separator, the electrolyte can be sufficiently held around the active materials. By using such a positive electrode and a negative electrode, capacity and/or output sufficient for performing charging and discharging can be ensured.

### (Positive Electrode Active Material)

The positive electrode active material preferably contains a material that reversibly holds at least anions. The positive electrode active material preferably contains a material that reversibly holds anions and cations. Examples of the material that reversibly holds at least anions include a material that adsorbs and desorbs at least anions and a material that occludes and releases (or inserts and desorbs) at least anions. The former is a material that causes non-faradaic reactions during charging and discharging, while the latter is a material that causes faradaic reactions during charging and discharging. Of these, the material that adsorbs and desorbs at least anions is preferably used.

Examples of such a material include a porous carbon material (also referred to as a first porous carbon material). Specifically, a porous carbon material that adsorbs and desorbs at least anions is preferably used. Examples of the first porous carbon material include active carbon, nanoporous carbon, mesoporous carbon, microporous carbon, and carbon nanotubes. The first porous carbon material may be subjected to activation treatment or not subjected to activation treatment. Such first porous carbon materials may be used alone or in combination of two or more thereof. Of the first porous carbon materials, preferred examples include active carbon and microporous carbon.

The positive electrode active material may contain, in addition to the first porous carbon material, optionally another active material. The content of the first porous carbon material in the positive electrode active material is preferably more than 50% by mass, may be 80% by mass or more or 90% by mass or more. The content of the first porous carbon material in the positive electrode active material is 100% by mass or less. In particular, the content of active carbon and microporous carbon in the positive electrode active material preferably satisfies such a range. Also, the positive electrode active material preferably contains only the first porous carbon material (in particular, active carbon and/or microporous carbon).

Examples of the microporous carbon include known ones used for alkali metal ion capacitors. For example, usable microporous carbons include those formed by heating metal carbides such as silicon carbide and titanium carbide in an atmosphere containing chlorine gas.

Examples of the active carbon include known ones used for alkali metal ion capacitors. Examples of the material for active carbon include wood; coconut shells; pulp spent liquor; coal or coal pitch obtained by pyrolysis of coal; heavy oil or petroleum pitch obtained by pyrolysis of heavy oil; and phenol resins. In general, carbonized materials are subsequently activated. Examples of the activation process include gas activation process and chemical activation process.

The average particle size (median diameter D₅₀ in volume-based particle size distribution; hereafter, same definition) of the active carbon is not particularly limited, but is preferably 20 µm or less. The specific surface area (BET specific surface area) is also not particularly limited, but is preferably about 800 to about 3000 m²/g. The specific surface area satisfying this range is advantageous in increasing the electrostatic capacity of the capacitor and also enables a decrease in the internal resistance.

The manner in which the positive electrode active material is held on the positive electrode current collector is fixing, adhesion, and/or supporting. The positive electrode active material is preferably held by filling a positive electrode mixture containing the positive electrode active material into the positive electrode current collector.

### (Positive Electrode Mixture)

The positive electrode mixture contains the positive electrode active material as an essential component and a conductive assistant and/or a binder as an optional component. At least a portion of the conductive assistant used for the positive electrode may be made to adhere to the surface of the positive electrode current collector to form a conductive layer, and the positive electrode mixture may be held on the positive electrode current collector so as to cover the conductive layer. The presence of the conductive assistant in the positive electrode (or the positive electrode mixture) enables a further increase in the conductivity of the positive electrode. The presence of the binder in the positive electrode mixture enables formation of stronger binding between particles of the positive electrode active material, between the positive electrode active material particles and the conductive assistant, and between the positive electrode active material particles or the conductive assistant and the current collector.

Examples of the conductive assistant include carbon blacks such as acetylene black and Ketjenblack; graphites (for example, natural graphites such as flake-like graphite and earthy graphite; and artificial graphites); conductive compounds such as ruthenium oxide; and conductive fibers such as carbon fibers and metal fibers. The conductive assistants may be used alone or in combination of two or more thereof.

The amount of the conductive assistant relative to 100 parts by mass of the positive electrode active material is, for example, 0.1 to 20 parts by mass, preferably 0.1 to 10 parts by mass. When the amount of the conductive assistant is in such a range, the conductivity of the positive electrode mixture is easily ensured. In an embodiment according to the present invention, since a three-dimensional mesh-like current collector is used, even in the case of a small amount of the conductive assistant, high conductivity of the positive electrode is easily ensured. For example, the amount of the conductive assistant relative to 100 parts by mass of the positive electrode active material may be 5 parts by mass or less (for example, 0.1 to 5 parts by mass), or may be 3 parts by mass or less (for example, 0.1 to 3 parts by mass).

The type of the binder is not particularly limited. Examples of the binder include fluororesins such as polyvinylidene fluoride (PVDF) and polytetrafluoroethylene; chlorine-containing vinyl resins such as polyvinyl chloride; polyolefin resins; rubber-like polymers such as styrene-butadiene rubber; polyvinylpyrrolidone and polyvinyl alcohol; and cellulose derivatives [cellulose ethers, for example, carboxyalkyl celluloses (such as carboxy C₁₋₄ alkyl-celluloses) such as carboxymethyl cellulose (CMC) and carboxyethyl cellulose, and salts of cellulose ethers (for example, alkali metal salts such as sodium carboxymethyl cellulose)]. The binders can be used alone or in combination of two or more thereof.

When a positive electrode active material that contains the first porous carbon material such as active carbon is used, the positive electrode mixture slurry is preferably dried at high temperature. Accordingly, the binder preferably used contains a highly heat-resistant cellulose ether (such as a carboxyalkyl cellulose) such as CMC and/or a salt of the cellulose ether. The content of the cellulose ether (in particular, a carboxyalkyl cellulose such as CMC) and the salt of the cellulose ether in the binder is, for example, 50 to 100% by mass, preferably 70 to 100% by mass, more preferably 85 to 100% by mass.

The amount of the binder relative to 100 parts by mass of the positive electrode active material is, for example, selected from the range of about 0.5 to about 15 parts by mass, preferably 1 to 12 parts by mass, more preferably 3 to 10 parts by mass. In an embodiment according to the present invention, since a three-dimensional mesh-like positive electrode current collector is used, even in the case of a small amount of the binder, a large amount of the positive electrode mixture can be held on the current collector. The amount of the binder relative to 100 parts by mass of the positive electrode active material may be 5 parts by mass or less (for example, 1 to 5 parts by mass), or may be 2 to 4 parts by mass.

During production of the positive electrode, in general, the positive electrode mixture is used in the form of slurry containing components of the positive electrode mixture (such as a positive electrode active material, a conductive assistant, and a binder). The positive electrode mixture slurry is obtained by dispersing components of the positive electrode mixture in a dispersion medium. Examples of the dispersion medium include organic solvents such as N-methyl-2-pyrrolidone (NMP) and water. The dispersion medium is removed by drying during production of the positive electrode (for example, after the current collector is filled with the slurry and/or after the current collector is rolled). The positive electrode mixture can be filled into the current collector by a known method.

The positive electrode has a maximum surface roughness Rz1 of 35 µm or less, preferably 30 µm or less, more preferably 28 µm or less; Rz1 is, for example, 15 µm or more, preferably 20 µm or more. These lower limit values and upper limit values can be freely combined. Rz1 may be 15 to 35 µm, 15 to 30 µm, or 20 to 30 µm. When the positive electrode has a maximum surface roughness Rz1 of more than 35 µm, the separator tends to be broken and an internal short-circuit tends to occur. When Rz1 is less than 15 µm, the separator tends to be displaced and an internal short-circuit tends to occur.

The surface roughness of the positive electrode may vary in accordance with, for example, the type and particle size of the positive electrode active material and the type of the binder. However, the surface roughness of the positive electrode can be controlled by adjusting the compression pressure during production of the positive electrode (line pressure in the case of rolling with a roll).

The positive electrode has a thickness of, for example, 150 to 2000 µm, preferably 180 to 1500 µm, more preferably 200 to 1200 µm. When the positive electrode has a thickness in such a range, it can hold a large amount of electrolyte, so that capacity and/or output sufficient for performing charging and discharging is easily obtained.

The positive electrode has a porosity of, for example, 10 to 70% by volume, preferably 15 to 70% by volume, more preferably 20 to 70% by volume. When the positive electrode has a porosity in such a range, even in the case of using a small-thickness separator, high capacity (and/or output) is easily ensured.

### (Negative Electrode)

The negative electrode includes a negative electrode current collector having a three-dimensional mesh-like metal skeleton, and a negative electrode active material held on the negative electrode current collector. The negative electrode active material can be held on the negative electrode current collector by fixing, adhesion, and/or supporting.

The three-dimensional mesh-like skeleton of the negative electrode current collector is the same as the above-described one of the positive electrode current collector. The negative electrode current collector preferably has a hollow skeleton as with the positive electrode current collector. For the current collector, porosity, average pore size, the width of the hollow within the skeleton, specific surface area, and the like can be appropriately selected from the ranges described as examples for the positive electrode current collector.

Preferred examples of the material for the negative electrode current collector include copper, copper alloys, nickel, nickel alloys, and stainless steel. The negative electrode current collector can be produced as in the positive electrode current collector except that, during covering of the resin porous body with metal, such a material is used instead of aluminum or an aluminum alloy.

The negative electrode active material preferably contains a material that reversibly holds alkali metal ions. Examples of the material that reversibly holds alkali metal ions include a material that adsorbs and desorbs alkali metal ions and a material that occludes and releases (or inserts and desorbs) alkali metal ions. The former is a material that causes non-faradaic reactions during charging and discharging, while the latter is a material that causes faradaic reactions during charging and discharging. Of these, the material that occludes and releases (or inserts and desorbs) alkali metal ions is preferably used.

Examples of the material include a carbon material that occludes and releases alkali metal ions (also referred to as a second carbon material), alkali metal titanium oxides [such as lithium titanium oxides (for example, spinel lithium titanium oxides such as lithium titanate) and sodium titanium oxides (such as sodium titanate)], silicon oxide, silicon alloys, tin oxide, and tin alloys. Examples of the second carbon material include graphitizable carbon (soft carbon), non-graphitizable carbon (hard carbon), and a carbonaceous material having a graphite-type crystal structure. The negative electrode active materials may be used alone or in combination of two or more thereof. The negative electrode active materials preferably have a theoretical capacity of 300 mAh/g or more. Of the negative electrode active materials, the second carbon material is preferred; in particular, the carbonaceous material having a graphite-type crystal structure (hereafter, also referred to as a third carbon material) and/or hard carbon is preferred.

The graphite-type crystal structure means a layered crystal structure and examples thereof include a cubic crystal structure and a rhombohedral crystal structure. Examples of the third carbon material include natural graphites (such as flake-like graphite), artificial graphites, and graphitized mesocarbon microbeads. These third carbon materials may be used alone or in combination of two or more thereof.

When a negative electrode active material that contains the third carbon material is used, in the alkali metal ion capacitor, during charging, alkali metal ions are inserted between layers of the graphite-type crystal structure of the third carbon material, while, during discharging, alkali metal ions between layers of the graphite-type crystal structure are released. One of indexes used for indicating the degree of the development of the graphite-type crystal structure in the third carbon material is (002) average interlayer distance d₀₀₂ determined in an X-ray diffraction spectrum of the third carbon material. The third carbon material preferably has an average interlayer distance d₀₀₂ of less than 0.337 nm. The lower limit of the average interlayer distance d₀₀₂ is not particularly limited; however, the average interlayer distance d₀₀₂ can be defined as, for example, 0.335 nm or more. By using a third carbon material having an average interlayer distance d₀₀₂ in such a range, during charging, alkali metal ions can be more efficiently inserted into the graphite-type crystal structure, while, during discharging, alkali metal ions can be smoothly released from the graphite-type crystal structure.

Unlike graphite having a graphite-type crystal structure in which carbon net planes are stacked so as to form layers, hard carbon has a turbostratic structure in which carbon net planes are stacked so as to be three-dimensionally disordered. Even when hard carbon is subjected to a heating treatment at high temperature (for example, 3000°C), no conversion from the turbostratic structure to the graphite-type crystal structure occurs and no development of graphite crystallites is observed. For this reason, hard carbon is also referred to as non-graphitizable carbon.

As described above, the third carbon material classified as graphite has an average interlayer distance d₀₀₂ that is a short distance of less than 0.337 nm. In contrast, hard carbon having a turbostratic structure has an average interlayer distance d₀₀₂ that is a long distance of, for example, 0.37 nm or more. The upper limit of the average interlayer distance d₀₀₂ of hard carbon is not particularly limited; however, the average interlayer distance d₀₀₂ may be defined as, for example, 0.42 nm or less. The average interlayer distance d₀₀₂ of hard carbon may be, for example, 0.37 to 0.42 nm, preferably 0.38 to 0.40 nm.

When alkali metal ions are held on hard carbon, alkali metal ions are held on (or occluded within) hard carbon probably by being inserted between layers of a graphite-type crystal structure that is contained in a small amount in hard carbon, by entering the turbostratic structure (specifically, regions that are not between layers of the graphite-type crystal structure), and/or by being adsorbed onto hard carbon.

Hard carbon, which has the turbostratic structure, has a low content of the graphite-type crystal structure. Accordingly, most of alkali metal ions are occluded within hard carbon probably by being inserted into regions that are not between layers of the graphite-type crystal structure (for example, gaps formed within the turbostratic structure), and/or by being adsorbed onto hard carbon. Accordingly, when hard carbon (in particular, hard carbon having an average interlayer distance d₀₀₂ in the above-described range) is used, change in the volume during charging and discharging is reduced and degradation due to repeated charging and discharging tends to be suppressed.

For the structure of hard carbon, various models have been proposed and the following is considered: within the turbostratic structure, carbon net planes are stacked so as to be three-dimensionally disordered, so that gaps are formed as described above. For this reason, compared with graphite having a crystal structure in which carbon net planes are densely stacked to form layers, hard carbon has a low average specific gravity. Graphite has an average specific gravity of about 2.10 to about 2.25 g/cm³, whereas hard carbon has an average specific gravity of, for example, 1.7 g/cm³ or less, preferably 1.4 to 1.7 g/cm³ or 1.5 to 1.7 g/cm³. When hard carbon has such an average specific gravity, change in the volume due to occlusion and release of alkali metal ions during charging and discharging tends to be further reduced and degradation of the active material can be more effectively suppressed.

Hard carbon encompasses, for example, carbonaceous materials obtained by carbonizing raw materials in the solid phase. Such raw materials that are carbonized in the solid phase are solid organic materials; specific examples include saccharides and resins (for example, thermosetting resins such as phenol resins and thermoplastic resins such as polyvinylidene chloride). Examples of the saccharides include saccharides having relatively short sugar chains (monosaccharides and oligosaccharides, such as sucrose) and polysaccharides such as celluloses [for example, cellulose and derivatives thereof (such as cellulose esters and cellulose ethers); and cellulose-containing materials such as wood and fruit shells (such as coconut shells)]. These raw materials may be used alone or in combination of two or more thereof. Hard carbon is obtained by carbonizing such raw materials by heating in the solid phase. The carbonization may be performed at a temperature of, for example, about 500 to about 1600°C. The carbonization may be performed by appropriately combining heating at a first temperature (for example, a temperature of 500°C or higher and lower than 800°C) and heating at a second temperature (for example, a temperature of 800 to 1600°C) higher than the first temperature. Hard carbon also encompasses glassy carbon. As hard carbon, such materials may be used alone or in combination of two or more thereof.

The negative electrode active material may contain an active material other than hard carbon and the third carbon material. From the standpoint of efficient occlusion and release of alkali metal ions, the content of hard carbon and/or the third carbon material in the negative electrode active material is preferably 80% by mass or more (specifically 80 to 100% by mass), more preferably 90% by mass or more (specifically 90 to 100% by mass). The negative electrode active material may be constituted by hard carbon and/or the third carbon material alone.

As in the positive electrode, the negative electrode can be obtained by filling the negative electrode current collector with a negative electrode mixture (specifically a negative electrode mixture slurry), optionally performing drying, and compressing (or rolling) the negative electrode current collector in its thickness direction. Alternatively, the negative electrode may be obtained by forming, on the surface of the negative electrode current collector, a deposition film of the negative electrode active material by a gas phase method such as vapor deposition or sputtering, and compressing (or rolling) the negative electrode current collector in its thickness direction. As in the positive electrode, at least a portion of the conductive assistant used for the negative electrode may be made to adhere to the surface of the negative electrode current collector to form a conductive layer, and the negative electrode mixture or the negative electrode active material may be held on the negative electrode current collector so as to cover the conductive layer.

The negative electrode active material may be pre-doped with alkali metal ions. As a result of pre-doping with alkali metal ions, the negative electrode potential is sufficiently decreased. Thus, the voltage of the capacitor is increased, so that the alkali metal ion capacitor has a high capacity. Here, the pre-doping is to make the negative electrode to occlude alkali metal ions in advance before the capacitor is operated. Note that the alkali metal ions are the same as the alkali metal ions contained in the electrolyte.

The negative electrode mixture slurry may contain, in addition to the negative electrode active material, a binder and a conductive assistant, for example. The dispersion medium and the binder can be appropriately selected from the examples described for the positive electrode mixture. Of the binders, fluororesins such as PVDF are preferably used. When such a binder is used, the surface roughness of the negative electrode is easily controlled to be low. The amount of the binder relative to 100 parts by mass of the negative electrode active material can be appropriately selected from the above-described ranges of the amount of the binder relative to 100 parts by mass of the positive electrode active material.

Examples of the conductive assistant include carbon blacks such as acetylene black and Ketjenblack; conductive compounds such as ruthenium oxide; and conductive fibers such as carbon fibers and metal fibers. The amount of the conductive assistant relative to 100 parts by mass of the negative electrode active material can be appropriately selected from the above-described ranges of the amount of the conductive assistant relative to 100 parts by mass of the positive electrode active material.

The negative electrode has a maximum surface roughness Rz2 of 35 µm or less, preferably 20 µm or less (or less than 15 µm), more preferably µm or less or 10 µm or less. The lower limit of Rz2 is 0 µm or more, preferably 5 µm or more. These upper limit values and lower limit values can be freely combined; Rz2 may be 5 to 20 µm, or 5 µm or more and less than 15 µm, or 5 to 12 µm, or 5 to 10 µm. When the negative electrode has a maximum surface roughness Rz2 of more than 35 µm, the separator tends to be damaged and an internal short-circuit tends to occur.

The alkali metal ion capacitor contains the positive electrode active material and the negative electrode active material that are different materials, so that, by unknown mechanism, the maximum surface roughness Rz1 of the positive electrode tends to be higher than the maximum surface roughness Rz2 of the negative electrode. More appropriate binders may be selected in response to the types of active material; different binders may provide different surface roughnesses. The surface roughness of the negative electrode may be adjusted by appropriately selecting, for example, components of the negative electrode and/or the amounts of the components, or by adjusting the compression pressure as in the positive electrode, or by both of these methods.

The ratio Rz1/Rz2 of the maximum surface roughness Rz1 of the positive electrode to the maximum surface roughness Rz2 of the negative electrode is preferably 1.5 or more, more preferably 2 or more. The ratio Rz1/Rz2 is, for example, 5 or less, preferably 3 or less, more preferably 2.5 or less. When the ratio Rz1/Rz2 satisfies such a range, displacement and breakage of the separator are more easily suppressed, so that occurrence of an internal short-circuit can be more effectively suppressed. The ratio Rz1/Rz2 may be 1.5 to 5, or 1.5 to 3. The thickness of the negative electrode can be selected from the same ranges as in the thickness of the positive electrode.

### (Separator)

The separator has ion permeability. The separator is disposed between the positive electrode and the negative electrode so as to physically separate these electrodes from each other to prevent a short-circuit. The separator has a porous structure and holds the electrolyte within the pores to thereby enable permeation of ions. Examples of the material for the separator include polyolefin resins such as polyethylene and polypropylene; polyester resins such as polyethylene terephthalate; polyamide resins; and polyimide resins such as polyimide and polyamide-imide. The separator may contain one of these materials, or may contain two or more of these materials.

Of these materials, preferred are polyamide resins; in particular, preferred are aromatic polyamides (for example, fully aromatic polyamides such as aramid). Since aromatic polyamides have relatively high rigidity, even in the case of a small-thickness separator, particularly in combination with a positive electrode employing a binder containing a carboxyalkyl cellulose (such as CMC) and/or a salt thereof, slipping tends to be suppressed and occurrence of displacement of the separator tends to be suppressed.

The separator has a thickness of 10 µm or less, preferably 9 µm or less. The separator preferably has a thickness of 3 µm or more, more preferably 5 µm or more. These upper limit values and lower limit values can be freely combined. The separator may have a thickness of 3 to 10 µm, or 5 to 10 µm. In an embodiment according to the present invention, even with a separator having such a small thickness, a large amount of electrolyte can be held for the positive electrode and the negative electrode, so that capacity and/or output sufficient for performing charging and discharging can be ensured. In addition, the surface roughnesses of the positive electrode and the negative electrode are controlled to be in specific ranges, so that breakage and/or displacement of the separator can be suppressed. As a result, occurrence of an internal short-circuit can be suppressed.

The separator, which may be, for example, a nonwoven fabric formed of ultrathin fibers, is preferably a fine porous membrane (specifically, a porous film formed by casting and/or drawing, for example) from the standpoint of easily achieving the above-described small thickness. In particular, a fine porous membrane containing a polyamide resin such as an aromatic polyamide is preferably used as the separator. The fine porous membrane may have an average pore size of, for example, 0.001 to 10 µm, or 0.01 to 1 µm.

The fine porous membrane may be a monolayer film or a multilayer film including plural layers that differ in material and/or porosity, for example. The fine porous membrane may optionally contain at least one filler selected from the group consisting of inorganic fillers (such as ceramic particles and glass fibers) and organic fillers (such as resin particles and resin fibers).

The separator has a porosity of, for example, 40 to 80% by volume, preferably 40 to 70% by volume, more preferably 50 to 70% by volume. When the separator has a porosity in such a range, occurrence of an internal short-circuit is easily suppressed and also high ion conductivity (or ion permeability) is easily ensured.

### (Electrolyte)

The electrolyte can contain anions and cations. The electrolyte of the alkali metal ion capacitor contains alkali metal ions and anions in order to provide alkali metal ion conductivity. The electrolyte is preferably a non-aqueous electrolyte containing alkali metal ions and anions. Examples of the non-aqueous electrolyte include electrolytes (organic electrolytes) prepared by dissolving salts (alkali metal salts) of alkali metal ions and anions in non-aqueous solvents (or organic solvents), and ionic liquids containing alkali metal ions and anions. In the electrolyte, the concentration of the alkali metal salt or alkali metal ions can be appropriately selected from the range of, for example, 0.3 to 5 mol/L.

Such an organic electrolyte may contain, in addition to a non-aqueous solvent (organic solvent) and an alkali metal salt, ionic liquid and/or an additive, for example. The total content of the non-aqueous solvent and the alkali metal salt in the electrolyte may be, for example, 60 to 100% by mass or 70 to 100% by mass, or may be 70 to 95% by mass. The content of the ionic liquid and the additive is preferably low; and, in some preferred cases, ionic liquid is not contained (in other words, a case where the content of the non-aqueous solvent and the alkali metal salt in the electrolyte is 100% by mass, and a case where the balance other than the non-aqueous solvent and the alkali metal salt in the electrolyte is an additive).

Herein, the term "ionic liquid" is used to denote a liquid that is a salt in the molten state (molten salt) and has ion conductivity. When an ionic liquid is used for the electrolyte, the electrolyte may contain, in addition to the ionic liquid containing cations such as alkali metal ions and anions, a non-aqueous solvent and/or an additive, for example. The ionic liquid content in the electrolyte is, for example, 60 to 100% by mass, preferably 70 to 100% by mass.

The alkali metal ions are, for example, at least one species selected from the group consisting of lithium ions, sodium ions, potassium ions, rubidium ions, and cesium ions. Of these, preferred is at least one species selected from the group consisting of lithium ions and sodium ions. Alkali metal ion capacitors that employ electrolytes having lithium ion conductivity are also referred to as lithium ion capacitors. Alkali metal ion capacitors that employ electrolytes having sodium ion conductivity are also referred to as sodium ion capacitors.

Examples of the species of the anion (first anion) forming the alkali metal salt include a hexafluorophosphate ion (PF₆⁻ ), a tetrafluoroborate ion (BF₄⁻ ), a trifluoromethanesulfonate ion (CF₃SO₃⁻), and a bissulfonylamide anion. Such alkali metal salts may be used alone or in combination of two or more alkali metal salts that differ in species of the first anion.

Preferred examples of the bissulfonylamide anion include a bis(fluorosulfonyl)amide anion (FSA⁻); and bis(perfluoroalkylsulfonyl)amide anions (PFSA⁻) such as a bis(trifluoromethylsulfonyl)amide anion (TFSA⁻), a bis(pentafluoroethylsulfonyl)amide anion, and a (fluorosulfonyl)(trifluoromethylsulfonyl)amide anion.

The non-aqueous solvent contained in the electrolyte is not particularly limited and may be selected from known non-aqueous solvents used for alkali metal ion capacitors. From the standpoint of ion conductivity, preferred examples of the non-aqueous solvent include cyclic carbonates such as ethylene carbonate, propylene carbonate, and butylene carbonate; chain carbonates such as dimethyl carbonate, diethyl carbonate, and ethyl methyl carbonate; and cyclic carbonic esters such as γ-butyrolactone. Such non-aqueous solvents can be used alone or in combination of two or more thereof.

The ionic liquid containing alkali metal ions contains alkali metal ions and anions (second anions). The second anions may be anions of the examples described for the first anion. The second anions preferably contain at least bissulfonylamide anions. The content of the bissulfonylamide anions in the second anions is, for example, 80 to 100 mol%, preferably 90 to 100 mol%.

The ionic liquid containing alkali metal ions may contain, in addition to alkali metal ions (first cations), second cations. The second cations, which may be inorganic cations other than alkali metal ions, such as magnesium ions, calcium ions, and ammonium cations, are preferably organic cations. Such second cations may be used as one species alone or in combination of two or more species thereof.

Examples of organic cations used as the second cations include cations derived from aliphatic amines, alicyclic amines, and aromatic amines (for example, quaternary ammonium cations); nitrogen-containing organic onium cations such as cations having a nitrogen-containing heterocycle (in other words, cations derived from cyclic amines); sulfur-containing onium cations; and phosphorus-containing onium cations.

Of the nitrogen-containing organic onium cations, preferred are cations having, as the nitrogen-containing heterocyclic skeleton, pyrrolidine, pyridine, or imidazole. Examples of the quaternary ammonium cations include tetraalkyl ammonium cations such as a tetramethylammonium cation, an ethyltrimethylammonium cation, a hexyltrimethylammonium cation, a tetraethylammonium cation (TEA⁺), and a methyltriethylammonium cation (TEMA⁺).

The organic onium cation having a pyrrolidine skeleton preferably has two alkyl groups on the single nitrogen atom forming the pyrrolidine ring. Examples of such an organic onium cation include a 1,1-dimethylpyrrolidinium cation, a 1,1-diethylpyrrolidinium cation, a 1-ethyl-1-methylpyrrolidinium cation, a 1-methyl-1-propylpyrrolidinium cation (MPPY⁺), a 1-butyl-1-methylpyrrolidinium cation (MBPY⁺), and a 1-ethyl-1-propylpyrrolidinium cation.

The organic onium cation having a pyridine skeleton preferably has one alkyl group on the single nitrogen atom forming the pyridine ring. Examples of such an organic onium cation include 1-alkyl pyridinium cations such as a 1-methylpyridinium cation, a 1-ethylpyridinium cation, and a 1-propylpyridinium cation.

The organic onium cation having an imidazole skeleton preferably has one alkyl group on each of the two nitrogen atoms forming the imidazole ring. Examples of such an organic onium cation include a 1,3-dimethylimidazolium cation, a 1-ethyl-3-methylimidazolium cation (EMI⁺), a 1-methyl-3-propylimidazolium cation, a 1-buthyl-3-methylimidazolium cation (BMI⁺), a 1-ethyl-3-propylimidazolium cation, and a 1-butyl-3-ethylimidazolium cation. Of these, preferred are imidazolium cations having a methyl group and an alkyl group having 2 to 4 carbon atoms, such as EMI⁺ and BMI⁺.

An alkali metal ion capacitor according to an embodiment of the present invention can be produced by, for example, a step (a) of forming an electrode group from a positive electrode, a negative electrode, and a separator disposed between the positive electrode and the negative electrode, and a step (b) of placing the electrode group and an electrolyte into a cell case.

Figure 1 is a longitudinal sectional view schematically illustrating an alkali metal ion capacitor according to an embodiment of the present invention. The alkali metal ion capacitor includes a multilayer electrode group, an electrolyte (not shown), and a cuboidal aluminum case 10 containing the electrode group and the electrolyte. The case 10 is constituted by an open-top closed-bottomed case body 12 and a lid 13 covering the open top.

The alkali metal ion capacitor is assembled in the following manner. Positive electrodes 2 and negative electrodes 3 are stacked with separators 1 therebetween to form the electrode group. The resultant electrode group is inserted into the case body 12 of the case 10. The subsequent step is to inject the electrolyte into the case body 12 to impregnate the electrolyte into gaps between the separators 1, the positive electrodes 2, and the negative electrodes 3 that form the electrode group. Alternatively, when the electrolyte is ionic liquid, the electrode group may be impregnated with the ionic liquid, and the electrode group containing the ionic liquid may then be placed into the case body 12.

The lid 13 is equipped with, at its center, a safety valve 16 for releasing internally generated gas when the internal pressure of the case 10 increases. With the safety valve 16 disposed at the center, on one side of the lid 13, an outer positive electrode terminal 14 is disposed so as to be insulated from the case 10 and extend through the lid 13; and, at a position on the other side of the lid 13, an outer negative electrode terminal (not shown) is disposed so as to be electrically connected to the case 10 and extend through the lid 13.

The multilayer electrode group is constituted by rectangular sheet members that are plural positive electrodes 2, plural negative electrodes 3, and plural separators 1 disposed between the electrodes. In Fig. 1, the separators 1 are formed so as to have the shape of bags surrounding the positive electrodes 2. However, the shape of the separators is not particularly limited. The plural positive electrodes 2 and the plural negative electrodes 3 are alternately arranged in the direction in which the electrodes are stacked within the electrode group.

One ends of the positive electrodes 2 may be equipped with positive electrode lead pieces 2a. The positive electrode lead pieces 2a of the plural positive electrodes 2 are bundled and connected to the outer positive electrode terminal 14 formed in the lid 13 of the case 10, so that the plural positive electrodes 2 are connected in parallel. Similarly, one ends of the negative electrodes 3 may be equipped with negative electrode lead pieces 3a. The negative electrode lead pieces 3a of the plural negative electrodes 3 are bundled and connected to the outer negative electrode terminal formed in the lid 13 of the case 10, so that the plural negative electrodes 3 are connected in parallel. The bundle of the positive electrode lead pieces 2a and the bundle of the negative electrode lead pieces 3a are desirably disposed with a gap therebetween so as to avoid contact therebetween, on the left and right sides of an end surface of the electrode group.

The outer positive electrode terminal 14 and the outer negative electrode terminal each have the shape of a pillar in which at least a portion exposed to the outside has a thread groove. A nut 7 is engaged with the thread groove of each terminal. The nut 7 is rotated so that the nut 7 is secured to the lid 13. A portion of each terminal, the portion being contained within the case 10, is equipped with a flange 8. The nut 7 is rotated, so that the flange 8 is secured to the inner surface of the lid 13 via a washer 9.

The electrode group is not limited to the multilayer type and may be formed by winding a positive electrode and a negative electrode with a separator therebetween. From the standpoint of suppressing deposition of alkali metal on the negative electrode, the negative electrode may be formed so as to have larger dimensions than the positive electrode.

### [Appendixes]

Regarding the above-described embodiments, the following Appendixes will be disclosed further.

### (Appendix 1)

An alkali metal ion capacitor including: a positive electrode; a negative electrode; a separator disposed between the positive electrode and the negative electrode; and an electrolyte containing alkali metal ions and anions, wherein the separator has a thickness of 10 µm or less, the positive electrode includes a positive electrode current collector having a three-dimensional mesh-like metal skeleton and a positive electrode active material held on the positive electrode current collector, the negative electrode includes a negative electrode current collector having a three-dimensional mesh-like metal skeleton and a negative electrode active material held on the negative electrode current collector, the positive electrode has a maximum surface roughness Rz1 of 35 µm or less and the negative electrode has a maximum surface roughness Rz2 of 35 µm or less.

According to the Appendix 1, in spite of use of the small-thickness separator, capacity sufficient for performing charging and discharging can be obtained, and occurrence of an internal short-circuit between the positive electrode and the negative electrode can also be suppressed.

### (Appendix 2)

The alkali metal ion capacitor according to the Appendix 1, wherein, preferably, the positive electrode current collector and the negative electrode current collector each have a hollow skeleton; the positive electrode includes the positive electrode current collector and a positive electrode mixture that fills the positive electrode current collector and that contains the positive electrode active material; the positive electrode mixture contains the positive electrode active material, a conductive assistant, and a binder; the positive electrode active material contains a porous carbon material that reversibly holds at least the anions; the binder contains at least one selected from the group consisting of carboxy C₁₋₄ alkyl-celluloses and salts thereof; the negative electrode active material contains a material that reversibly holds the alkali metal ions; the separator is a fine porous membrane containing an aromatic polyamide; the separator has a porosity of 50 to 70% by volume; the separator has a thickness of 5 to 10 µm; the positive electrode has a maximum surface roughness Rzlof 15 to 35 µm; and a ratio Rz1/Rz2 of the maximum surface roughness Rz1 of the positive electrode to the maximum surface roughness Rz2 of the negative electrode is 1.5 to 3.

In such an alkali metal ion capacitor, while sufficient capacity and/or output is easily ensured, the effect of suppressing breakage and/or displacement of the separator during assembly of the alkali metal ion capacitor is very strongly provided.

### EXAMPLES

Hereinafter, the present invention will be specifically described with reference to Examples and Comparative Examples. However, the present invention is not limited to the following Examples.

### Example 1

A lithium ion capacitor was produced by the following procedure.

### (1) Production of Positive Electrode

### (a) Production of Positive Electrode Current Collector

A thermosetting polyurethane foam was prepared (porosity: 95% by volume; number of pores (cells) with respect to surface length of 1 inch (= 2.54 cm): about 50; length 100 mm x width 30 mm x thickness 600 µm). The foam was immersed in a conductive suspension containing graphite, carbon black (average particle size D₅₀ : 0.5 µm), a resin binder, a penetrant, and an antifoaming agent, and subsequently dried to form a conductive layer on the surface of the foam. The total content of graphite and carbon black in the suspension was 25% by mass.

While the foam having the conductive layer thereon was immersed in a molten salt aluminum plating bath, a direct current having a current density of 3.6 A/dm² was applied for 90 minutes to thereby form an aluminum layer. The mass of the aluminum layer relative to the apparent area of the foam was 150 g/m². The molten salt aluminum plating bath contained 33 mol% of 1-ethyl-3-methylimidazolium chloride and 67 mol% of aluminum chloride and had a temperature of 40°C.

While the foam having the aluminum layer thereon was immersed in lithium chloride-potassium chloride eutectic molten salt at 500°C, a negative potential of -1V was applied for 30 minutes to thereby decompose the foam. The resultant aluminum porous body was taken out from the molten salt, cooled, washed with water, and dried to provide a positive electrode current collector. The obtained positive electrode current collector had a porous structure having a three-dimensional mesh-like skeleton reflecting the porous shape of the foam and having interconnected pores, and had a porosity of 94% by volume, an average pore size of 500 µm, a specific surface area determined by the BET method (BET specific surface area) of 350 cm²/g, and a thickness of 1000 µm. The three-dimensional mesh-like aluminum skeleton had a hollow of interconnected pores formed by removing the foam. In this way, the positive electrode current collector was obtained.

### (b) Production of Positive Electrode

A positive electrode mixture slurry was prepared by mixing and stirring, with a mixer, active carbon powder (BET specific surface area: 2300 m²/g, average particle size D₅₀ : about 5 µm) as a positive electrode active material, acetylene black as a conductive assistant, CMC as a binder, and water as a dispersion medium. The mass ratio of components in the slurry was active carbon : acetylene black : CMC = 100:3.2:3.2. The resultant positive electrode mixture slurry was filled into the current collector obtained in the step (a), and dried at 120°C for 120 minutes. The dried article was compressed in the thickness direction with a pair of rolls, to thereby produce a positive electrode having a thickness of 800 µm.

### (2) Production of Negative Electrode

### (a) Production of Negative Electrode Current Collector

On the surface of a thermosetting polyurethane foam that was the same as in the production of the positive electrode current collector, a Cu film (conductive layer) was formed at a coating weight per unit area of 5 g/cm² by sputtering. While the foam having the conductive layer thereon was immersed as a workpiece into a copper sulfate plating bath, a direct current having a negative electrode current density of 2 A/dm² was applied to thereby form a Cu layer on the surface. The copper sulfate plating bath contained 250 g/L of copper sulfate, 50 g/L of sulfuric acid, and 30 g/L of copper chloride, and had a temperature of 30°C.

The foam having the Cu layer thereon was heat-treated at 700°C in the air atmosphere to thereby decompose the foam, and subsequently fired in a hydrogen atmosphere to thereby reduce an oxide film formed on the surface. Thus, a copper porous body (negative electrode current collector) was obtained. The obtained negative electrode current collector had a porous structure having a three-dimensional mesh-like skeleton reflecting the porous shape of the foam and having interconnected pores, had a porosity of 92% by volume, an average pore size of 500 µm, and a BET specific surface area of 200 cm²/g. The three-dimensional mesh-like copper skeleton had a hollow of interconnected pores formed by removing the foam.

### (b) Production of Negative Electrode

A negative electrode mixture slurry was prepared by mixing artificial graphite powder as a negative electrode active material, acetylene black as a conductive assistant, PVDF as a binder, and NMP as a dispersion medium. The mass ratio of graphite powder, acetylene black, and PVDF was 100:4:4. The resultant negative electrode mixture slurry was filled into the current collector obtained in the step (a), and dried at 120°C for 120 minutes. The dried article was rolled with a pair of rolls to produce a negative electrode having a thickness of 220 µm. Incidentally, in the steps (1) and (2), the filling amounts of the positive electrode mixture and the negative electrode mixture were adjusted such that the chargeable capacity of the pre-doped negative electrode was about 1.2 times or more the capacity of the positive electrode.

### (3) Production of Lithium Electrode

A lithium foil (thickness: 50 µm) was press-bonded to one of the surfaces of a punched copper foil (thickness: 20 µm, aperture size: 50 µm, aperture ratio: 50%, 2 cm x 2 cm) as a current collector, to thereby produce a lithium electrode. A nickel lead was welded to the other surface of the current collector of the lithium electrode.

### (4) Production of Lithium Ion Capacitor

The positive electrode and the negative electrode obtained in (1) and (2) above were cut into 1.5 cm x 1.5 cm sections, and the mixture was removed from a 0.5 cm wide portion along a side of each section to thereby form an exposed portion of the current collector. An aluminum lead was welded to the current collector exposed portion of the positive electrode. A nickel lead was welded to the current collector exposed portion of the negative electrode. Note that, in each of the obtained positive electrode and negative electrode, the area of the portion having the mixture was 1.5 cm².

The positive electrode and the negative electrode were stacked with an aramid separator (thickness: 8.8 µm, porosity: 50% by volume) between the positive electrode and the negative electrode, to thereby form a unit cell electrode group. In addition, the lithium electrode was disposed on the negative electrode side of the electrode group with a polyolefin separator (a laminate of a polyethylene fine porous membrane and a polypropylene fine porous membrane) therebetween. The resultant multilayer body was placed into a cell case formed of an aluminum laminate sheet.

Subsequently, an electrolyte was injected into the cell case to cause the electrolyte to be impregnated into the positive electrode, the negative electrode, and the separator. The electrolyte was a solution containing 1.0 mol/L of LiPF₆ in a solvent mixture of 1:1 (volume ratio) of ethylene carbonate and diethyl carbonate. Finally, the cell case was sealed under reduced pressure with a vacuum sealer.

The lead wire of the negative electrode and the lead wire of the lithium electrode were connected to the power source outside the cell case. The cell in this state was left at rest in a thermostat oven at 30°C for a predetermined time until the temperature of the electrolyte reaches the temperature of the thermostat oven. Subsequently, charging between the negative electrode and the lithium electrode was performed at a current of 0.2 mA/cm² to a potential of 0 V with respect to metal lithium; and discharging was then performed at a current of 0.2 mA/cm² for 2.3 mAh to pre-dope the negative electrode active material with lithium. Thus, a lithium ion capacitor (A1) was produced. The design capacity of the lithium ion capacitor A1 was about 2.1 mAh/cm² at the time of charging of 5.0 V.

The obtained positive electrode, negative electrode, and lithium ion capacitor were subjected to the following evaluations (a) to (c).

### (a) Maximum Surface Roughnesses Rz1 and Rz2 of Positive Electrode and Negative Electrode

For one of the surfaces of the positive electrode, maximum roughness (maximum height) Rz1 (µm) was measured in compliance with JIS B0601:2001. Similarly, for one of the surfaces of the negative electrode, maximum roughness Rz2 (µm) was measured.

### (b) Capacity of Capacitor

The lithium ion capacitor was charged at a current of 1 mA/cm² to an upper-limit voltage of 3.8 V, and discharged at a current of 1 mA/cm² to a voltage of 2.2 V. This charge-discharge cycle was repeated 10 times, and the discharge capacity (mAh) during the 10th discharging was measured. A ratio (%) of this discharge capacity to the design capacity was calculated and evaluated as Capacity.

### (c) Short-Circuit Ratio and Displacement of Separator

A positive electrode and a negative electrode as above were stacked with an aramid separator as above between the positive electrode and the negative electrode to thereby form an electrode group. The obtained electrode group was placed into a cell case formed of an aluminum laminate sheet, to thereby produce a sample (unit cell). In each of the positive electrode and the negative electrode, a current collector exposed portion was formed by removing the mixture. An aluminum lead was welded to the current collector exposed portion of the positive electrode. A nickel lead was welded to the current collector exposed portion of the negative electrode. For each of examples, 10 unit cell samples were produced.

A load of 0.70 MPa was applied to each unit cell sample in the thickness direction of the electrode group. The voltages of the positive electrode and the negative electrode were measured to determine occurrence of an internal short-circuit. The ratio (%) of unit cells in which an internal short-circuit was observed was calculated. This ratio was evaluated as Short-circuit ratio. For the index of evaluation of displacement of a separator, during assembly of unit cell samples, samples easily assembled without displacement of separators were evaluated as A, and samples not easily assembled due to displacement of separators were evaluated as B.

### Example 2 and Comparative Examples 1 and 2

Positive electrodes and lithium ion capacitors were produced and evaluated as in Example 1 except that the maximum roughness Rz1 of the positive electrodes was changed to the values in Table 1. Note that the load applied to the electrode groups during measurement of the short-circuit ratio was changed as described in Table 1.

### Comparative Example 3

A positive electrode and a negative electrode were produced as in Example 1 except that an aluminum foil (thickness: 20 µm) was used as the positive electrode current collector, a copper foil (thickness: 18 µm) was used as the negative electrode current collector, and the positive electrode mixture layer and the negative electrode mixture layer were respectively formed on one of the surfaces of the positive electrode current collector and on one of the surfaces of the negative electrode current collector. A lithium ion capacitor was produced and evaluated as in Example 1 except that the obtained positive electrode and negative electrode were used.

For Examples and Comparative Examples, the evaluation results and loads applied to the electrode groups during measurement of the short-circuit ratio are described in Table 1. Note that A1 and A2 represent the lithium ion capacitors of Examples 1 and 2, and B1 to B3 represent the lithium ion capacitors of Comparative Examples 1 to 3.

**[Table 1]**

| | Rz1 µm | Rz2 µm | Rz1/Rz2 | Load MPa | Capacity % | Short-circuit ratio % | Displacement of separator |
|---|---|---|---|---|---|---|---|
| A1 | 23.38 | 8.35 | 2.80 | 0.70 | 100 | 0 | A |
| A2 | 34.00 | | 4.07 | 0.40 | 100 | 0 | A |
| B1 | 58.88 | | 7.05 | 0.09 | 100 | 10 | B |
| B2 | 220.54 | | 26.41 | 0.01 | - | 100 | B |
| B3 | 10.30 | 4.10 | 2.51 | 0.70 | 85 | 0 | A |

As described in Table 1, for the lithium ion capacitors A1 and A2 of Examples, in spite of using the small-thickness separators, high capacities were ensured even after charging and discharging. In contrast, for the lithium ion capacitor B3 of Comparative Example 3 using the metal foil current collectors, high capacity was not ensured in spite of using the same separator as in Examples. This is probably because, in the lithium ion capacitor B3, the amount of the electrolyte contributing to the charge-discharge reaction was insufficient.

The lithium ion capacitors A1 and A2 of Examples had very low short-circuit ratios and substantially no displacement of separators was observed. The reason why these capacitors had low short-circuit ratios is probably as follows: the positive electrodes and the negative electrodes had maximum surface roughnesses Rz1 and Rz2 of 35 µm or less, so that, in spite of application of loads to the electrode groups, breakage and/or displacement of the separators was suppressed and an internal short-circuit did not occur.

In contrast, in the lithium ion capacitors B1 and B2 of Comparative Examples in which Rz1 was more than 35 µm, in spite of Rz2 of 35 µm or less, the short-circuit ratios were very high and displacement of separators in the electrode groups was observed. The high short-circuit ratios were caused probably because, during application of loads to the electrode groups, breakage and/or displacement of the separators occurred.

### Industrial Applicability

An embodiment of the present invention provides an alkali metal ion capacitor in which capacity sufficient for charging and discharging is ensured and occurrence of an internal short-circuit is suppressed. Therefore, such ion capacitors can be used as power sources of various electronic devices, for example.

### Reference Signs List

1: separator, 2: positive electrode, 2a: positive electrode lead piece, 3: negative electrode, 3a: negative electrode lead piece, 7: nut, 8: flange, 9: washer, 10: case, 12: case body, 13: lid, 14: outer positive electrode terminal, 16: safety valve

## Claims

1. An alkali metal ion capacitor comprising: a positive electrode; a negative electrode; a separator disposed between the positive electrode and the negative electrode; and an electrolyte containing alkali metal ions and anions,
wherein the separator has a thickness of 10 µm or less,
the positive electrode includes a positive electrode current collector having a three-dimensional mesh-like metal skeleton and a positive electrode active material held on the positive electrode current collector,
the negative electrode includes a negative electrode current collector having a three-dimensional mesh-like metal skeleton and a negative electrode active material held on the negative electrode current collector,
the positive electrode has a maximum surface roughness Rz1 of 35 µm or less and the negative electrode has a maximum surface roughness Rz2 of 35 µm or less.

2. The alkali metal ion capacitor according to Claim 1, wherein the separator has a thickness of 3 to 10 µm.

3. The alkali metal ion capacitor according to Claim 1 or Claim 2, wherein the positive electrode current collector and the negative electrode current collector each have a hollow skeleton.

4. The alkali metal ion capacitor according to any one of Claim 1 to Claim 3, wherein the positive electrode has a maximum surface roughness Rz1 of 15 to 35 µm, and
the negative electrode has a maximum surface roughness Rz2 of less than 15 µm.

5. The alkali metal ion capacitor according to any one of Claim 1 to Claim 4, wherein the positive electrode active material contains a porous carbon material that reversibly holds at least the anions, and
the negative electrode active material contains a material that reversibly holds the alkali metal ions.

6. The alkali metal ion capacitor according to any one of Claim 1 to Claim 5, wherein the separator is a fine porous membrane containing an aromatic polyamide, and
the separator has a porosity of 40 to 70% by volume.

7. The alkali metal ion capacitor according to any one of Claim 1 to Claim 6, wherein a ratio Rz1/Rz2 of the maximum surface roughness Rz1 of the positive electrode to the maximum surface roughness Rz2 of the negative electrode is 1.5 to 5.

8. The alkali metal ion capacitor according to any one of Claim 1 to Claim 7, wherein the positive electrode includes the positive electrode current collector and a positive electrode mixture that fills the positive electrode current collector and that contains the positive electrode active material,
the positive electrode mixture contains the positive electrode active material, a conductive assistant, and a binder, and
the binder contains at least one selected from the group consisting of carboxyalkyl celluloses and salts thereof.
